# EUROPEAN PATENT APPLICATION

(11) **EP 4 734 449 A1**
(43) Date of publication of application: **29.04.2026**
(21) Application number: 25210649.7
(22) Date of filing: 23.10.2025
(51) Int. Cl.: H04L 9/40, H04L 9/08, H04L 9/32

(54) **METHOD OF GENERATING VIRTUAL PRIVATE NETWORK AND VIRTUAL PRIVATE NETWORK SYSTEM**

(30) Priority: 25.10.2024 KR 20240147514
(71) Applicant: ICTK Co., Ltd., Seoul 06241 (KR)
(72) Inventor: SHIM, Hyoung Sub, Seoul 05837 (KR); KANG, Bong Ho, Seoul 08735 (KR); IM, Hae Jung, Incheon 21458 (KR)
(74) Representative: Fuchs Patentanwälte Partnerschaft mbB

(57) **Abstract**

An embodiment discloses a virtual private network system that includes: a user device including a physical unclonable function (PUF)-based authentication device; and a server configured to establish an encrypted tunnel using WireGuard protocol with the user device mutually authenticated by the PUF-based authentication method.

## Description

### CROSS-REFERENCE TO RELATED APPLICATION

This application claims priority to and the benefit of Korean Patent Application No. 10-2024-0147514, filed on Oct 25, 2024, the disclosure of which is incorporated herein by reference in its entirety.

### BACKGROUND

### 1. Field of the Invention

The embodiment relates to a method of generating a virtual private network (VPN) and a VPN system.

### 2. Discussion of Related Art

The rapid advancement of information and communication technology in recent years has profoundly impacted our daily lives. In particular, with the advent of the Internet of Things (IoT) era, billions of intelligent devices are interconnected through networks. These devices make our lives more convenient by sharing data or controlling other devices. However, in the process of these devices communicating over networks, large amounts of sensitive personal information are exchanged, making the devices potential targets for hackers. This issue has raised concerns about the security of loT technology, and there is a need for a solution to this issue.

Moreover, recent technological advances are introducing elements that fundamentally threaten existing security systems. Among the technologies, the emergence of quantum computers is particularly noteworthy. Quantum computers have the ability to decrypt existing encryption algorithms at unprecedented speeds, making existing encryption methods currently in wide use, such as RSA and elliptic curve cryptography (ECC) algorithms, vulnerable to quantum computer attacks.

This implies that current security systems may become ineffective in the quantum computing era, and new security solutions, such as quantum-safe encryption algorithms, are urgently needed to resolve this issue. Quantum-safe encryption algorithms need to be designed to maintain a high level of security despite the computational capabilities of quantum computers, and quantum-safe encryption algorithms are expected to become a key element of future information security.

Specifically, a virtual private network (VPN) is a technology that allows individuals or organizations to securely access networks through public networks, such as the Internet. VPNs securely transmit data through encrypted communication tunnels, thereby maintaining the integrity and confidentiality of data transmitted through networks. Currently, VPN technology is used for a variety of purposes, such as enabling remote workers to access internal company networks, protecting the privacy of internet traffic, and bypassing access to geographically restricted content.

There are various VPN technologies, such as OpenVPN, IKEv2/IPSec, L2TP/IPSec, PPTP, WireGuard, SSL VPN, IPSec VPN, MPLS VPN, SoftEther VPN, and the like. In particular, existing SSL VPN and WireGuard implementation methods have several drawbacks. SSL VPN, which is based on TLS, involves a complex handshake procedure and incurs high processing costs, making configuration complicated and maintenance difficult. In addition, SSL VPN may cause high latency and has limited performance in large-scale network environments. In addition, such VPNs are vulnerable to security threats. As described above, although existing VPN solutions provide strong security, there is a need to resolve issues such as network performance degradation, complex configuration, and vulnerabilities to specific attacks.

### SUMMARY OF THE INVENTION

The present invention is directed to a method of generating a virtual private network (VPN) and a VPN system that integrate a physical unclonable function (PUF) and a post-quantum cryptography (PQC) algorithm, ensuring the confidentiality and integrity of data transmission and thereby providing an improved security environment.

The present invention is also directed to a method of generating a VPN and a VPN system that mitigate security threats by verifying the reliability of a device through PUF-based authentication technology that utilizes the unique physical characteristics of a user or a client device.

The present invention is also directed to a method of generating a VPN and a VPN system that minimize performance degradation while maintaining high confidentiality and integrity during data transmission based on the WireGuard protocol, which uses simple yet robust encryption algorithms.

The present invention is also directed to a method of generating a VPN and a VPN system that generate an encrypted tunnel between a client and a server through a PQC-based session key and transmit all data through the tunnel, thereby preventing data theft and tampering during transmission and maintaining continuous security through periodic key exchange renewal.

The technical objectives of the present invention are not limited to the above, and other objectives or effects that can be understood from the technical solutions or the embodiments described below may also be considered as included.

According to an aspect of the present invention, there is provided a VPN system including: a user device including a physical unclonable function (PUF)-based authentication method; and a server configured to establish an encrypted tunnel using WireGuard protocol with the user device mutually authenticated by the PUF-based authentication method.

The user device may transmit encryption algorithm information and PUF-based authentication information to the server.

The encryption algorithm information may include a symmetric key encryption algorithm and a public key encryption algorithm.

The public key encryption algorithm may include a CRYSTALS Kyber algorithm or a CRYSTALS Dilithium algorithm.

The user device may transmit a client public key to the server.

The server may transmit a server public key, to which an algorithm of the encryption algorithm information is applied, to the user device.

The user device may verify the server public key to perform a mutual authentication procedure with the server.

The server may generate a session key based on the client public key and a server private key.

The server may transmit the generated session key to the user device.

The user device may decrypt the received session key based on a client private key.

The decrypted session key may be identical to the session key generated by the server.

The user device may establish the encrypted tunnel with the server using the decrypted session key.

The user device may encrypt data with the decrypted session key and transmit the encrypted data to the server.

The user device or the server may periodically request key renewal.

According to an aspect of the present invention, there is provided a method of generating a VPN, which includes: transmitting a client public key, PUF-based authentication information, and encryption algorithm information; receiving a server public key and a verification result; and setting a common session key using the encryption algorithm information, the client public key, and the server public key and establishing an encrypted tunnel with the server.

The setting of the common session key and the establishing of the encrypted tunnel with the server may include receiving a session key generated and encrypted based on the client public key and a server private key.

The method may further include, after the receiving of the encrypted session key, decrypting the encrypted session key with a client private key.

The decrypted session key may be identical to the session key generated based on the client public key and the server private key.

According to an aspect of the present invention, there is provided a user device including: a communication module; a memory; and a processor operatively connected to at least one of the communication module and the memory, wherein the processor is configured to transmit a client public key, PUF-based authentication information, and encryption algorithm information, receive a server public key and a verification result, and set a common session key using the encryption algorithm information, the client public key, and the server public key and establish an encrypted tunnel with the server.

The processor may transmit and receive data based on a session key generated and encrypted based on the client public key and a server private key when setting the common session key and establishing the encrypted tunnel with the server.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a conceptual diagram of a virtual private network (VPN) system according to an embodiment;
FIG. 2 is a diagram for describing characteristics of a VPN system according to an embodiment;
FIG. 3 is a flowchart of operations of a VPN system according to an embodiment;
FIG. 4 is a detailed flowchart of one operation shown in FIG. 3;
FIG. 5 is a detailed flowchart of another operation shown in FIG. 3;
FIG. 6 is a detailed flowchart of still another operation shown in FIG. 3;
FIG. 7 is a detailed flowchart of yet another operation shown in FIG. 3; and
FIG. 8 is a detailed flowchart of yet another operation shown in FIG. 3.

### DETAILED DESCRIPTION OF EXEMPLARY EMBODIMENTS

Specific structural and procedural details disclosed herein are merely representative for purposes of describing embodiments according to the concept of the present disclosure. Accordingly, the embodiments according to the concept of the present disclosure may be embodied in many alternate forms. The present disclosure should not be construed as limited to the embodiments of the present disclosure set forth herein.

While the embodiments according to the concept of the present disclosure are susceptible to various modifications and alternative forms, specific embodiments thereof are shown by way of embodiment in the drawings and will herein be described in detail. It should be understood, however, that there is no intent to limit the embodiments according to the concept of the present disclosure to the particular forms disclosed, but on the contrary, the embodiments according to the concept of the present disclosure are to cover all modifications, equivalents, and alternatives falling within the spirit and scope of the invention.

It will be understood that, although the terms "first," "second," etc., may be used herein to describe various elements, these elements should not be limited by these terms. These terms are only used to distinguish one element from another. For example, a first element could be termed a second element, and similarly, a second element could be termed a first element, without departing from the scope of the present invention. As used herein, the term "and/or" includes any and all combinations of one or more of the associated listed items.

It will be understood that when a first element is referred to as being "connected" or "coupled" to a second element, the first element can be directly connected or coupled to the second element or intervening elements may be present. In contrast, when an element is referred to as being "directly connected" or "directly coupled" to another element, there are no intervening elements present. Other words used to describe the relationships between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a" and "an" are intended to include the plural forms as well, unless the context clearly indicates otherwise. It will be further understood that the terms "comprise," "comprising," "include" and/or "including" used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by those of ordinary skill in the art to which this invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

In addition, some embodiments may be represented by functional block configurations and various processing steps. Some or all of these functional blocks may be implemented using various numbers of hardware and/or software components that perform specific functions. For example, the functional blocks of the present disclosure may be implemented by one or more processors or microprocessors, or by circuit configurations designed to perform the intended functions. Moreover, for example, the functional blocks of the present disclosure may be implemented using various programming or scripting languages and embodied as algorithms executed by one or more processors. The present disclosure may also adopt conventional techniques for purposes such as electronic configuration, signal processing, and/or data processing. Terms such as "module" and "component" are used broadly and are not limited to mechanical or physical structures.

Hereinafter, embodiments will be described in detail with reference to the accompanying drawings. In the drawings, identical or corresponding components will be assigned the same reference numerals throughout the figures, and redundant descriptions thereof will be omitted.

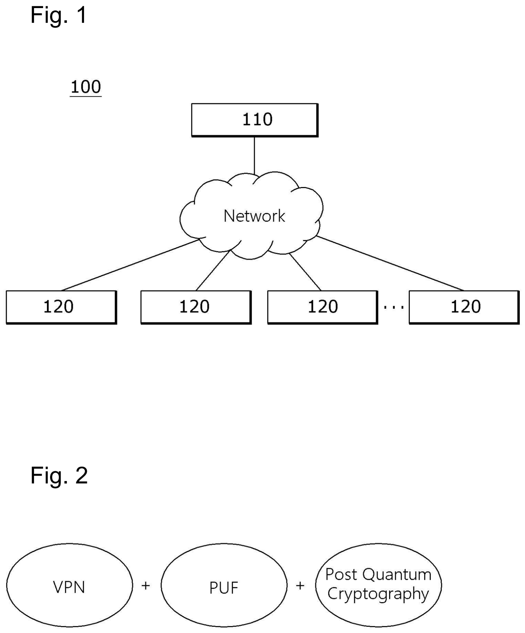

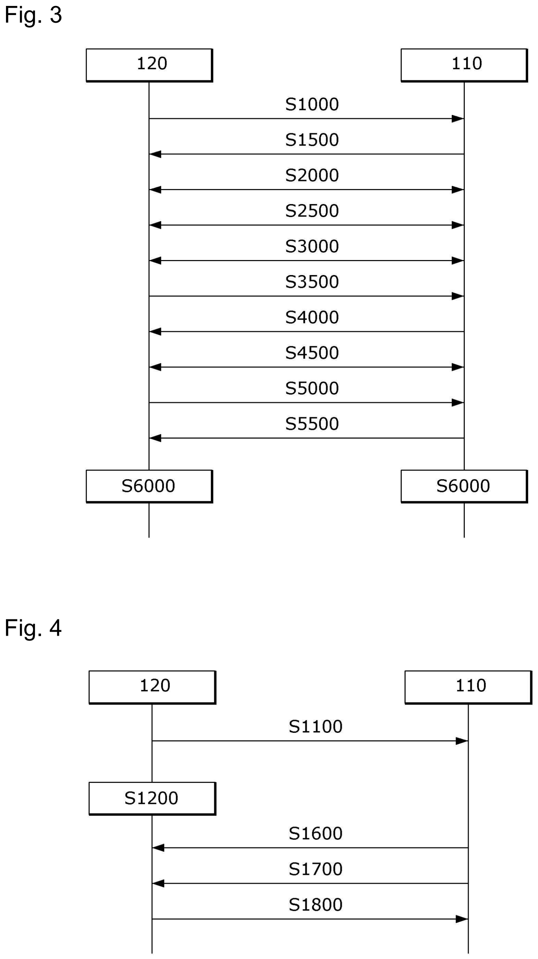

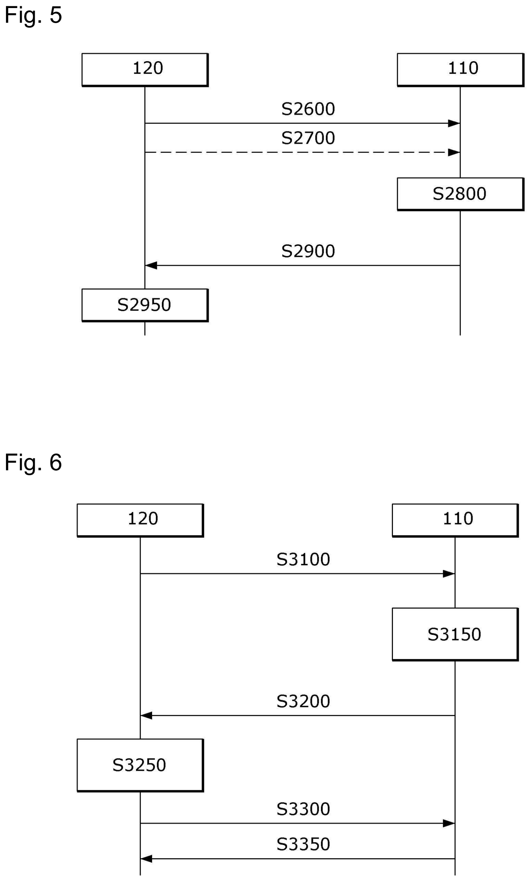

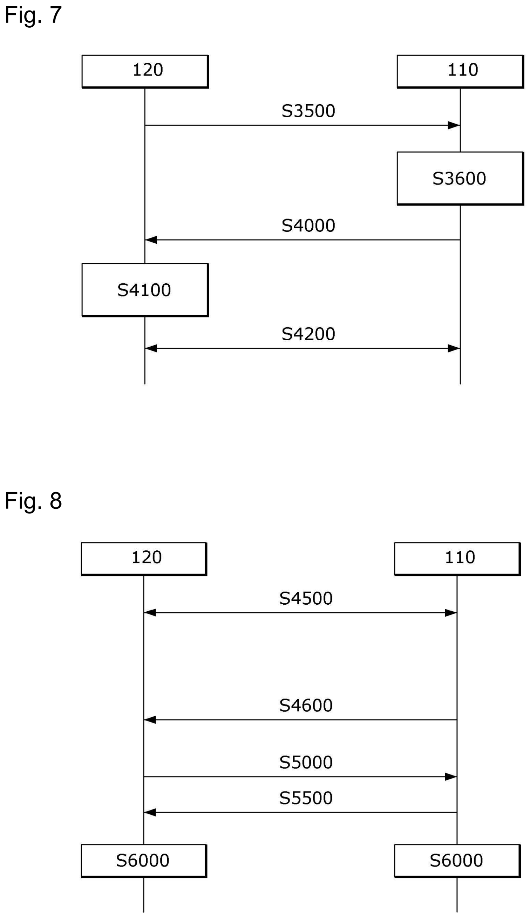

FIG. 1 is a conceptual diagram of a virtual private network (VPN) system according to an embodiment, FIG. 2 is a diagram for describing characteristics of a VPN system according to an embodiment, FIG. 3 is a flowchart of operations of a VPN system according to an embodiment, FIG. 4 is a detailed flowchart of one operation shown in FIG. 3, FIG. 5 is a detailed flowchart of another operation shown in FIG. 3, FIG. 6 is a detailed flowchart of still another operation shown in FIG. 3, FIG. 7 is a detailed flowchart of yet another operation shown in FIG. 3, and FIG. 8 is a detailed flowchart of yet another operation shown in FIG. 3.

Referring to FIGS. 1 and 2, a VPN system 100 according to the embodiment has a one-to-N structure (where N is a natural number) in which at least one user device (or client) 120 is connected to a single server 110.

The server 110 may communicate with a plurality of user devices 120. In addition, the server 200 may transmit encrypted data to each electronic device based on an authentication key received from each of the user devices 120.

The user device (or client) 120 may include various computing devices, such as smartphones, tablets, laptops, and personal computers, various wearable devices, such as smart watches and smart glasses, various home appliances, such as smart speakers, smart TVs, and smart refrigerators, smart ID cards, smart credit cards, data storage devices, smart vehicles, loT devices, and other electronic devices capable of communication.

The server 110 and the user device (or client) 120 may communicate with each other over a network, proceed with an authentication procedure through a handshake process, generate a session key for a VPN session between the server and the user device, and perform encryption and decryption on data.

In this case, the server 110 and the user device 120 may exchange public keys with each other during mutual authentication and generate a session key using a post-quantum cryptographic (PQC) algorithm to establish an encrypted communication channel. However, mutual authentication may also be performed only using a physical unclonable function (PUF) without the exchange of public keys.

Furthermore, the server 110 and the user device (or client) 120 may use a public key encryption algorithm for session key generation and use a symmetric key encryption algorithm for symmetric key generation. In particular, the server 110 and the user device 120 may perform session key exchange through a PQC-based public key encryption algorithm. This ensures secure key exchange through public key encryption. In other words, it can improve security.

In addition, the server 110 and the user device 120 may perform authentication based on the PUF of the user device 120. Accordingly, the reliability of the user device may be verified even without additional certificates. Once mutually authenticated through the PUF-based authentication method, the user device 120 and the server 110 may establish an encrypted tunnel using a protocol (e.g., WireGuard). As described above, the VPN system according to the embodiment may have a structure in which PUF authentication and a PQC-based public key encryption algorithm are applied to the VPN for establishing an encrypted tunnel. In particular, the server 110 and the user device 120 according to the embodiment may operate based on the WireGuard protocol to establish an encrypted tunnel with each other. Such a configuration enables high confidentiality and integrity during data transmission while minimizing performance degradation. Furthermore, the VPN system according to the embodiment may further improve security by applying PUF authentication and PQC to the WireGuard protocol as described above.

In addition, the server 110 or the user device 120 may be an electronic device that may each include a processor and a storage device. In particular, the user device 120 may have authentication for establishing a secure channel determined based on a PUF. A PUF may provide an unpredictable digital value determined based on process variation during the manufacturing process.

The processor is a device that controls operations performed by the server 110 or the user device 120 and may include, for example, a CPU, MCU, and the like. In the user device 120. The processor may extract an extraction circuit including at least one of a plurality of circuits based on a PUF and generate a value or a key for authentication using a seed from the extraction circuit. As described above, a PUF may provide an unpredictable digital value. Even when individual PUFs are manufactured in exactly the same manufacturing process, the digital values provided by individual PUFs may differ from each other due to process variations. Therefore, a PUF may also be referred to as a physical one-way function (POWF) that is practically impossible to duplicate. Such a PUF may be used for generating authentication keys for security, communication and/or device authentication. For example, a PUF may be used to provide a unique key to distinguish a device from another device or for communication between devices or between a device and a server. The memory may store data required for authentication, channel establishment and the like.

Hereinafter, it can be understood that a method of generating a VPN according to an embodiment is performed by both the server 110 and the user device 120. For example, as an embodiment, various methods of generating a VPN described above may be performed by processors of the user device and the server.

Referring to FIG. 3, a method of generating a VPN according to an embodiment includes an operation in which the client or the user device 120 and the server 110 exchange and authenticate an encryption algorithm and public keys with each other, an operation in which the server 110 generates a server session key and exchanges the session key, and an operation in which data is exchanged between each other based on the session key.

More specifically, the method includes: an operation in which the user device 120 requests a connection to the server 110 (S1000), an operation in which the server 110 accepts the connection from the user device 120 (S1500), an operation in which the server 110 and the user device 120 perform mutual authentication (S2000), an operation in which the server 110 and the user device 120 exchange session keys (S2500), an operation in which the server 110 and the user device 120 establish an encrypted tunnel (S3000), operations in which the server 110 and the user device 120 transmit encrypted data to each other and transmit response data (S3500 and S4000), an operation in which key renewal is performed (S4500), operations in which the server 110 or the user device 120 requests termination and notifies of termination (S5000 and S5500), and an operation in which the session keys are discarded (S6000).

Further, referring to FIG. 4, in order to form a VPN, the user device 120 may request access to the server 110 (S1000). The user device 120 may request a connection to the server 110 (S1100). For example, a user device 120, such as an IP camera, may request a connection to the server, and may transmit, for example, a Client hello message to the server 110. This may correspond to the user device 120 (or client) requesting session establishment to start a secure communication with the server for setup of a VPN session. Furthermore, the user device 120 may also transmit a client public key included in the message to the server 110. Here, the client public key may not be based on PQC. However, mutual authentication may also be performed only through a PUF without such a public key exchange, as described above.

Additionally, the user device 120 may transmit additional identification information to the server 110. For example, the user device 120 may transmit a MAC address, a serial number (SN), and the like to the server 110.

In addition, the user device 120 may transmit encryption algorithm information and PUF-based authentication information to the server 110. As an embodiment, the encryption algorithm information may include a symmetric key encryption algorithm and a public key encryption algorithm. In particular, the public key encryption algorithm may include CRYSTALS Kyber or CRYSTALS Dilithium algorithms as PQC algorithms. That is, the user device 120 may transmit a list of encryption algorithms supported by the user device 120 to the server 110. After this encryption algorithm information is transmitted and algorithm information selected by the server 110 is transmitted to the user device 120, a PQC algorithm may be applied to the public key.

The user device 120 may then wait for a response from the server 110 (S1200).

Subsequently, the server 110 may view the encryption algorithms and public key encryption algorithms provided by the user device 120. The server 110 may select an encryption algorithm to use from among the encryption algorithm information transmitted by the user device 120. For example, the server 110 may select Kyber768 from the PQC algorithms. In addition, the server 110 may select ChaCha20 from the symmetric encryption algorithms.

The server 110 may accept the connection request from the user device 120 (S1500). The server 110 may transmit the server public key to the user device 120 while accepting the connection from the client (S1600). However, as described above, mutual authentication may be performed later without such transmission of a public key before mutual authentication. After mutual authentication, the public key with the PQC algorithm applied may be transmitted. In this case, the server public key transmitted from the server 110 to the user device 120 is a public key with the PQC algorithm applied for session key generation. In this case, the server 110 may transmit a server public key, to which an algorithm (corresponding to a selected algorithm) among the encryption algorithm information is applied, to the user device 120. However, such transmission of a public key may also be performed after mutual authentication.

Furthermore, the server 110 may transmit the selected encryption algorithm information to the user device 120 included in the server response (S1700 and S1800). That is, the server 110 may transmit the encryption algorithm information selected by the server 110.

Further, referring to FIG. 5, the server 110 and the user device 120 may perform mutual authentication (S2000). The user device 120 may transmit PUF-based authentication information to the server to prove that the user device 120 is a client. In addition, as described above, the user device 120 may transmit a client public key to the server in advance.

Accordingly, the user device 120 may transmit authentication information including a PUF value to the server 110, thereby proving that the user device 120 is a physically unique device (S2600).

The server 110 may verify the reliability of the user device 120 based on the authentication information including the PUF value. The server 110 may compare client information registered in advance with the authentication information transmitted by the user device 120. Based on a result of the comparison, the server 110 may determine whether the user device 120 is a trustworthy device.

Since a PUF is unique to each user device 120, the server 110 may verify the uniqueness of the user device 120 through a PUF.

Such authentication may be performed simultaneously in the operations of requesting a connection and accepting a connection (S1000 and S1500).

The server 110 may further transmit additional information for session establishment with the user device 120 (S2700). For example, the server 110 may transmit a session timestamp, version information or the like.

Furthermore, when the server 110 receives the PUF from the user device 120, the server 110 may verify whether the user device 120 is a trustworthy device based on the PUF (S2800). The server 110 may transmit the result of the PUF-based verification to the user device 120 (S2900). The user device 120 may verify the server identity, and the like (S2950). Through this process, mutual trust is established between the user device 120 and the server 110, and preparation for session key exchange may be completed. As described above, mutual authentication may be completed when the server 110 transmits a message indicating that PUF authentication is complete to the user device 120 along with the PUF authentication result, as acceptance of the connection request from the user device 120. Furthermore, the user device 120 may perform the mutual authentication procedure with the server 110 by verifying the server public key.

Further, referring to FIG. 6, the server 110 and the user device 120 may exchange session keys (S2500). First, the user device 120 may transmit a client public key to the server 110 (S3100). In this case, the client public key and the server public key may not have been exchanged yet.

Accordingly, the user device 120 may transmit the public key of the user device 120 to the server 110 for session key exchange. The client public key and the server public key described below may be public keys based on a PQC algorithm.

The server 110 may encrypt session key information using the client public key received from the user device 120 (S3150). Specifically, the server 110 may generate and encrypt a session key using the client public key.

That is, the server 110 may encrypt the generated session key through a PQC algorithm. The server 110 may transmit the encrypted session key to the user device 120 (S3200). In addition, the server 110 may transmit the server public key, to which the algorithm of the encryption algorithm information is applied, to the user device 120 (S3200).

The user device 120 may decrypt the received session key based on the client private key (S3250). In this case, the decrypted session key may be identical to the session key generated by the server 110.

Subsequently, the user device 120 may set the decrypted session key as a common session key (S3300). Furthermore, the server 110 may check whether the common session key set by the user device 120 has been properly decrypted (S3350). That is, the server 110 may check whether the session key of the user device 120 is identical to the session key generated by the server 110. In other words, the session key decrypted by the user device 120 may be identical to the session key generated by the server 110. With such a configuration, the server 110 and the user device 120 have a common session key, and thus an environment in which data may be transmitted and received using the symmetric key encryption method based on the session key may be established.

The server 110 and the user device 120 may establish an encrypted tunnel (S3000). The user device 120 may share the same session key as the server 110 with the decrypted session key. Such a configuration may enable the server 110 and the user device 120 to perform data transmission and reception through symmetric encryption. That is, the server 110 and the user device 120 may establish an encrypted tunnel. In the encrypted tunnel, the session key may be used to encrypt and decrypt data using a symmetric encryption algorithm (e.g., ChaCha20-Poly1305).

For example, the session key may be used as a symmetric key, and all subsequent data communications may use a symmetric encryption algorithm (e.g., ChaCha20-Poly1305).

Further, referring to FIG. 8, the server 110 and the user device 120 may transmit encrypted data and transmit response data between the server 110 and the user device 120 (S3500 and S4000). For example, when the server 110 receives encrypted data from the user device 120, the server 110 may decrypt the encrypted data based on the shared session key. The reverse case is also applicable. That is, when the server 110 transmits encrypted data (S4000), the user device 120 may decrypt the encrypted data (S4100).

As described above, once the session key has been shared, all communications between the server 110 and the user device 120 may performed in a symmetric encrypted state (S4200). Furthermore, since the session key sharing is performed with the PQC algorithms applied, a more secure communication can be achieved.

Further, referring to FIG. 8, key renewal may be performed during the process of transmitting and receiving encrypted data (S4500). Key renewal may be performed periodically. Such a configuration ensures that even when a session key used during communication is exposed, previous or subsequent communication content may be protected. Therefore, data security can be strengthened.

When a key renewal request occurs, the server 110 may generate a new session key reusing the public key of the client and the private key of the server. The server 110 may transmit the generated new session key to the user device 120 (S4600). As before, the server 110 may encrypt the new session key with the public key of the client and transmit the encrypted new session key to the user device 120.

The user device 120 may decrypt the encrypted new session key and obtain the new session key transmitted by the server 110. In this case, the existing session key expires, and the new session key may be applied to subsequent data transmission and reception. That is, the server 110 and the user device 120 may perform data encryption and decryption using the renewed new session key. In other words, data can no longer be decrypted using the previous session key. Therefore, the server 110 and the user device 120 may continuously maintain security while exchanging data through the renewed session keys.

Additionally, regardless of renewal, after the session key has been shared, the user device 120 and the server 110 may check integrity during data transmission. For example, an integrity check (e.g., message authentication using HMAC or Poly1305) may be performed to check whether encrypted data has not been tampered with.

The server 110 or the user device 120 may request termination and notify of termination (S5000 and S5500).

The server 110 or the user device 120 may terminate communication through a session termination request. For example, the server 110 or the user device 120 may transmit a session termination request to the other, and the server 110 may accept the request. Accordingly, all session keys and information may be discarded (S6000). That is, all session information and states are discarded, and all related data is safely removed to prevent security issues. This enables the server 110 and the user device 120 to securely discard the session keys and session state information that have been used.

In addition, the method of generating a VPN according to the disclosed embodiment may be implemented in the form of program instructions executable by various computer devices and may be recorded on a computer-readable medium. In addition, an embodiment of the present disclosure may be implemented as a computer-readable recording medium on which one or more programs including instructions for executing the method of generating a VPN are recorded.

The computer readable medium may be provided with program instructions, data files, data structures, and the like alone or in combination. The program instructions recorded on the computer readable medium may be specially designed and constructed for the purposes of the present invention or may be well known and available to those skilled in the art of computer software. Examples of the computer readable storage medium include hardware devices configured to store and execute program instructions. Examples of the computer readable storage medium include magnetic media such as hard disks, floppy disks, and magnetic tape, optical media such as a compact disc read-only memory (CD-ROM) and a digital video disk (DVD), magneto-optical media such as floptical disks, a ROM, a RAM, a flash memory, etc. The program instructions include not only machine language code made by a compiler but also high level code that may be used by an interpreter or the like which is executed by a computer.

The machine-readable storage medium may be provided in the form of a non-transitory storage medium. Here, when a storage medium is referred to as "non-transitory," it can be understood that the storage medium is tangible and does not include a signal (for example, electromagnetic waves), but rather that data is semi-permanently or temporarily stored in the storage medium. For example, a "non-transitory storage medium" may include a buffer in which data is temporarily stored.

According to one embodiment, the method of generating a VPN according to the various embodiments disclosed herein may be provided in a computer program product. The computer program product may be traded between a seller and a buyer as a product. The computer program product may be distributed in the form of a machine-readable storage medium (e.g., a compact disc read only memory (CD-ROM)) or may be distributed directly between two user devices (e.g., smartphones) through an application store (e.g., Play StoreTM), or online (e.g., downloaded or uploaded). In the case of online distribution, at least a portion of the computer program product may be stored at least semi-permanently or may be temporarily generated in a machine-readable storage medium, such as a memory of a server of a manufacturer, a server of an application store, or a relay server.

Specifically, it may be implemented as a computer program product including a recording medium on which a program for performing the method of generating a VPN according to the disclosed embodiment is stored.

While the embodiments have been described in detail above, the scope of the present invention is not limited thereto, and various modifications and alterations made by those skilled in the art using the basic concept of the invention as defined in the following claims also fall within the scope of the present invention.

The term "unit" used in the present embodiment may be a software or hardware element such as an FPGA or ASIC. Although a "unit" performs a certain role, it is not limited to a software or hardware element. A "unit" may be implemented in addressable storage media. A "unit" may also be configured to reproduce one or more processors. For example, a "unit" may include various types of elements (e.g., software elements, object-oriented software elements, class elements, task elements, etc.), processes, functions, attributes, procedures, subroutines, segments of program code, drivers, firmware, micro-code, circuits, data, databases, data structures, tables, arrays, variables, etc. Functions provided by elements and "units" may be combined into fewer elements and "units" or may be further divided into additional elements and "units." In addition, elements and "units" may also be implemented to reproduce one or more CPUs in devices or security multi-cards.

According to an embodiment of the present invention, a method of generating a VPN and a VPN system that integrate a PUF and PQC algorithms implement an improved security environment by ensuring the confidentiality and integrity of data transmission.

In addition, the present invention can implement a method of generating a VPN and a VPN system that escape security threats by verifying device reliability through PUF-based authentication technology that utilizes the unique physical characteristics of user or client devices.

Furthermore, a method of generating a VPN and a VPN system that minimize performance degradation while maintaining high confidentiality and integrity during data transmission based on the WireGuard protocol, which uses simple yet powerful encryption algorithms, can be implemented.

In addition, a method of generating a VPN and a VPN system that maintain continuous security through periodic key exchange renewal while preventing data theft and tampering during transmission by creating encrypted tunnels between clients and servers through PQC-based session keys and transmitting all data through these tunnels can be implemented.

The various beneficial advantages and effects of the present invention are not limited to the above content and may be more easily understood in the process of describing specific embodiments of the present invention.

While the invention has been described with reference to specific embodiments, these are merely illustrative and are not intended to limit the scope of the invention. It will be understood by those skilled in the art that various modifications and applications not exemplified above are possible without departing from the essential characteristics of the present embodiment. For example, each component specifically described in the embodiments may be implemented with modifications. Differences related to such modifications and applications should be interpreted as falling within the scope of the present invention as defined in the appended claims.

## Claims

1. A virtual private network (VPN) system comprising:
a user device including a physical unclonable function (PUF)-based authentication method; and
a server configured to establish an encrypted tunnel using WireGuard protocol with the user device mutually authenticated by the PUF-based authentication method.

2. The VPN system of claim 1, wherein the user device transmits encryption algorithm information and PUF-based authentication information to the server.

3. The VPN system of claim 2, wherein the encryption algorithm information includes a symmetric key encryption algorithm and a public key encryption algorithm.

4. The VPN system of claim 3, wherein the public key encryption algorithm includes a CRYSTALS Kyber algorithm or a CRYSTALS Dilithium algorithm.

5. The VPN system of claim 2, wherein the user device transmits a client public key to the server.

6. The VPN system of claim 5, wherein the server transmits a server public key, to which an algorithm of the encryption algorithm information is applied, to the user device.

7. The VPN system of claim 6, wherein the user device verifies the server public key to perform a mutual authentication procedure with the server.

8. The VPN system of claim 7, wherein the server generates a session key based on the client public key and a server private key.

9. The VPN system of claim 8, wherein the server transmits the generated session key to the user device.

10. The VPN system of claim 9, wherein the user device decrypts the received session key based on a client private key.

11. The VPN system of claim 10, wherein the decrypted session key is identical to the session key generated by the server.

12. The VPN system of claim 10, wherein the user device establishes the encrypted tunnel with the server using the decrypted session key.

13. The VPN system of claim 12, wherein the user device encrypts data with the decrypted session key and transmits the encrypted data to the server.

14. The VPN system of claim 9, wherein the user device or the server periodically requests key renewal.

15. A method of generating a virtual private network (VPN), the method comprising:
transmitting a client public key, a physical unclonable function (PUF)-based authentication information, and encryption algorithm information;
receiving a server public key and a verification result; and
setting a common session key using the encryption algorithm information, the client public key, and the server public key and establishing an encrypted tunnel with the server.
